# EUROPÄISCHE PATENTSCHRIFT

(11) **EP 3 861 293 B1**
(45) Veröffentlichungstag und Bekanntmachung des Hinweises auf die Patenterteilung: **29.03.2023**
(21) Anmeldenummer: 20706954.3
(22) Anmeldetag: 10.02.2020
(51) Int. Cl.: H02K 5/16

(54) **HALTEVORRICHTUNG FÜR EINEN DREHGEBER**
HOLDING DEVICE FOR A ROTARY ENCODER
DISPOSITIF DE MAINTIEN POUR UN TRANSDUCTEUR ROTATIF

(30) Priorität: 06.03.2019 EP 19161010
(43) Veröffentlichungstag der Anmeldung: 11.08.2021
(73) Patentinhaber: Siemens Aktiengesellschaft, 80333 München (DE)
(72) Erfinder: DOELZ, Volker, 97616 Bad Neustadt (DE)
(74) Vertreter: Siemens Patent Attorneys
(86) Internationale Anmeldenummer: PCT/EP2020/053319
(87) Internationale Veröffentlichungsnummer: WO 2020/177985

(56) Entgegenhaltungen:
- DE-A1-102005 039 081
- US-A1- 2008 238 267
- US-A1- 2014 263 988

## Beschreibung

Die Erfindung betrifft eine Haltevorrichtung zur Kopplung einer Gebereinheit eines Drehgebers mit einer elektrischen Maschine.

Die Erfindung betrifft weiter einen Drehgeber mit einer derartigen Haltevorrichtung, eine elektrische Maschine mit einer derartigen Haltevorrichtung sowie ein Verfahren zur Montage eines Drehgebers, insbesondere eines modularen Drehgebers mittels einer derartigen Haltevorrichtung.

Derartige Drehgeber sind in der Regel optische Drehzahlgeber, die zur Drehzahlregelung von Elektromotoren eingesetzt werden. Am gebräuchlichsten sind fertig auf dem Markt erhältliche einbaubare Drehgeber, die in der Regel aus einer Lagerung, einer Codescheibe sowie einer Elektronikeinheit mit Beleuchtung bestehen. Bei sogenannten Multiturn-Gebern werden neben der Winkellage auch die Anzahl der Umdrehungen gezählt. Dies geschieht entweder mechanisch über ein Getriebe oder magnetisch über einen sogenannten Wiegand-Sensor. Häufig gehören derartige Geber mit zu den teuersten Bauteilen eines Elektromotors.

Die WO 2010/072498 A1 betrifft ein Montageverfahren für einen modularen Drehgeber an dem zu messenden Objekt, bei dem der modulare Drehgeber eine Codescheibe und eine elektrische Schaltungseinheit umfasst, und bei dem die Codescheibe auf einer Drehachse montiert ist. Das Verfahren umfasst die Schritte: Anordnen der Codescheibe auf der Drehachse, Einstellen der Codescheibe entlang der Drehachse, um zu bewirken, dass der Abstand von dem zu messenden Objekt einem vorbestimmten Wert entspricht und Befestigen der elektrischen Schaltungseinheit an dem zu messenden Objekt.

Die US 2014/263988 A1 betrifft einen Drehgeber mit freischwebendem, flexiblem Sensorträger, der die herkömmliche Lagerung und das Gehäuse eines Drehgebers überflüssig macht. Eine Buchse ist drehfest an einer Welle angebracht, deren Drehung gemessen werden soll. Eine Geberscheibe ist axial mit der Buchse verbunden. Ein Sensor wird von einem Sensorträger fluchtend über der Geberscheibe gehalten. Der Sensor kann direkt mit dem Sensorträger oder mit einer Leiterplatte verbunden sein, die mit dem Sensorträger verbunden ist. Ein Wellenausrichtungsabschnitt des Sensorträgers umgibt die Welle und mehrere Stabilisierungsarme halten den Sensorträger an Ort und Stelle, wodurch der Sensor in der richtigen Ausrichtung gehalten wird.

Aus der US 2008/238267 A1 ist eine Geberanordnung eines Gleichstrommotors mit einem Gebergehäuse, einer Geberscheibe, einer senkrecht zu einer Motorwelle angeordneten Leiterplatte mit einem die Geberscheibe U-förmig umgebenden optischen Sensor und einem parallel ausgerichteten Anschlussstecker zur Motorwelle bekannt. Das Gebergehäuse besteht aus einem Gebergehäusering und einem Gebergehäusedeckel. Der Gebergehäusering ist mit einer radialen Aussparung versehen, die im Bereich des Anschlusssteckers angeordnet ist. Der optische Sensor ist auf der Leiterplatte seitlich des Anschlusssteckers angeordnet und mit einem Aufnahmeschlitz für die Geberscheibe versehen, der zur Motorwelle hin offen ist, auf der die Geberscheibe montiert ist.

Die DE 10 2005 039081 A1 betrifft ein Sensorkopfmodul für einen modular aufgebauten Drehgeber, der zumindest das Sensorkopfmodul und ein Wellenflanschmodul, welches aus einer Vielzahl von Wellenflanschmodulen für unterschiedliche Wellendurchmesser auswählbar ist und welches mit dem Sensorkopfmodul verbindbar ist, umfasst, mit einem Sensor, um in einem mit dem Wellenflanschmodul verbundenen Zustand ein Gebersignal zu erfassen, welches von einer Signalquelle des Wellenflanschmoduls an den Sensor geliefert wird und ein Maß für eine Verdrehung einer Messwelle repräsentiert, und mit einer mechanischen Schnittstelle, die ausgebildet ist, um mit allen entsprechend ausgebildeten mechanischen Schnittstellen der Vielzahl der Wellenflanschmodule jeweils derart verbindbar zu sein, dass der Sensor im verbundenen Zustand eine vorbestimmte relative Lage zu der Signalquelle einnimmt.

Der Erfindung liegt die Aufgabe zu Grunde, eine einfache, kostengünstige und sichere Montage eines insbesondere modularen Drehgebers und gleichzeitig dessen sicheren Betrieb zu ermöglichen.

Diese Aufgabe wird einerseits durch eine Haltevorrichtung mit den im Anspruch 1 angegebenen Merkmalen gelöst.

Die Erfindung wird weiter durch einen Drehgeber mit einer derartigen Haltevorrichtung gemäß Anspruch 8, eine elektrische Maschine mit einer derartigen Haltevorrichtung gemäß Anspruch 11 sowie durch ein Verfahren zur Montage eines Drehgebers, insbesondere eines modularen Drehgebers mittels einer derartigen Haltevorrichtung gemäß Anspruch 12 gelöst.

Der Erfindung liegt die Erkenntnis zugrunde, dass anstelle eines fertig einbaubaren Drehgebers kostengünstig auch ein sogenannter Kit-Geber eingesetzt werden kann, der als modularer Drehgeber verwendet werden kann. Hierbei spielt dann die erforderliche Montage eine erhebliche Rolle, wobei erfindungsgemäß die Montage in überraschend einfacher Weise dadurch gelingt, dass die Haltevorrichtung im Wesentlichen aus einem Haltering und aus einem Lagerschild gebildet wird, wobei der Haltering erste Kopplungselemente zur mechanischen Kopplung des Halterings mit dem Lagerschild des Drehgebers aufweist und wobei das Lagerschild Führungsnuten zur Aufnahme eines Gebermoduls der Gebereinheit aufweist. Hierdurch kann das Gebermodul sicher in der Gebereinheit positioniert werden und mittels des Halterings mit dem Lagerschild des Drehgebers mechanisch gekoppelt werden.

Das Gebermodul wird dabei nicht direkt ans Lagerschild geschraubt, es wird lediglich über den Haltering geklemmt und an das Lagerschild gedrückt. Die Geberlagerung besteht aus dem als einem Geberlagerungsgehäuse wirkenden Lagerschild, einer Geberlagerungswelle mit beispielsweise zwei Kugellagern und einer Anstellfeder sowie einer Kupplungshälfte, über die die komplette Einheit mit Geber und Platine an den Motor angebaut wird. Die Gebereinheit wird dabei separat gefertigt und dann erst an den Motor angebaut. Die Anstellfeder dient dem Anstellen der beiden Kugellager. Durch die Anstellfeder werden die Außenringe der beiden Kugellager gegeneinander nach außen verschoben und so Spiel verhindert und eine gewisse Vorspannung erreicht. Die Montagereihenfolge der Geberlagerung ist wie folgt: das erste Kugellager der Geberlagerung bis auf Anschlag Wellenbund fügen, Anschlagfeder einlegen, das zweite Kugellager bündig zum Wellenabsatz fügen, Geberlagerungsläufer in Geberlagerungsgehäuse schieben und Kugellager-Außenringe mit Geberlagerungsgehäuse verkleben.

Vorteilhafte Ausgestaltungen der Erfindung sind in den Unteransprüchen enthalten.

Eine einfache und sichere mechanische Kopplung der modularen Einzelkomponenten Haltering und Lagerschild gelingt dadurch, dass die im Haltering vorgesehenen ersten Kopplungselemente als Bohrungen zur Aufnahme von ersten Befestigungsschrauben zur mechanischen Befestigung des Halterings auf dem Lagerschild ausgebildet sind.

Eine sowohl mechanische als auch elektrische Ankopplung der Gebereinheit mit einer benötigten Platine kann auf einfache Weise dadurch erzielt werden, dass der Haltering zweite Kopplungselemente zur mechanischen Kopplung des Halterings mit einer Platine der Gebereinheit aufweist.

Hierzu sind die im Haltering vorgesehenen zweiten Kopplungselemente vorzugsweise als Gewindebohrungen zur Aufnahme von zweiten Befestigungsschrauben ausgebildet, wobei die zweiten Befestigungsschrauben sowohl einer mechanischen Befestigung der Platine auf dem Haltering als auch einer elektrischen Masseverbindung der Platine dienen.

Eine kostengünstige Abschirmung von äußeren Störfeldern vor allem gegenüber einem auf der Gebereinheit angeordneten Sensor, insbesondere einem Wiegand-Sensor wird dadurch erzielt, dass an den Haltering mindestens ein Abschirmelement zur Abschirmung von äußeren Störfeldern angeformt ist, insbesondere zur Abschirmung von auf einen an der Gebereinheit angeordneten Wiegand-Sensor einwirkenden äußeren Störfeldern.

In vorteilhafter Weise ist das Abschirmelement als segmentförmige Laschen oder als geschlossener Topf ausgebildet.

Ein effektiver Schutz vor Verschmutzungen und Umwelteinflüssen für den Drehgeber kann dadurch sichergestellt werden, dass das Lagerschild eine insbesondere halbkreisförmig ausgebildete Staubschutzwand zum Schutz einer in dem Lagerschild angeordneten Codescheibe aufweist.

Die Grundkomponenten eines erfindungsgemäßen modularen Drehgebers umfassen somit ein Drehgebermodul, eine Codescheibe, eine Platine sowie die diese Komponenten verbindende Haltevorrichtung.

Eine sichere Positionierung des Gebermoduls im Lagerschild wird dabei auf einfache Weise dadurch erzielt, dass das Gebermodul mindestens zwei Führungslaschen aufweist, die insbesondere am oberen Ende des Gebermoduls angeordnet sind, wobei die Führungslaschen zum Zusammenwirken mit den im Lagerschild vorgesehenen Führungsnuten vorgesehen sind.

Das erfindungsgemäße Verfahren zur Montage eines Drehgebers, insbesondere eines modularen Drehgebers mittels einer Haltevorrichtung umfasst folgende Schritte:
Aufbau der Geberlagerung bestehend aus einem Lagerschild,
einer Geberlagerungswelle mit insbesondere zwei Kugellagern, einer Anstellfeder und einer Kupplungshälfte,
   - Aufpressen der Codescheibe auf die Geberlagerungswelle,
   - Einschieben des Gebermoduls, wobei die Laschen als Führung in den Nuten des Lagerschilds dienen,
   - Einsetzen des Gebermoduls in den durch eine Öffnung im Lagerschild gebildeten Zentrierabsatzes,
   - Aufsetzen des Halterings auf das Lagerschild,
   - Montage des Halterings auf dem Lagerschild mittels der ersten Befestigungsschrauben,
   - Montage der Platine einschließlich Verbindungsleitung auf dem Haltering mittels der zweiten der zweiten Befestigungsschrauben und
   - Montage der kompletten Gebereinheit an die elektrische Maschine.

Im Folgenden wird die Erfindung anhand der in den Figuren dargestellten Ausführungsbeispiele näher beschrieben und erläutert.

Es zeigen:
- FIG 1: einen modularen Drehgeber mit einer im Wesentlichen aus einem Haltering und einem Lagerschild gebildeten Haltevorrichtung,
- FIG 2: ein Gebermodul für den in Fig. 1 gezeigten modularen Drehgeber,
- FIG 3: einen Haltering für den in FIG 1 gezeigten modularen Drehgeber,
- FIG 4: ein Lagerschild für den in FIG 1 gezeigten modularen Drehgeber und
- FIG 5: einen Seitenschnitt durch eine elektrische Maschine mit einem modularen Drehgeber.

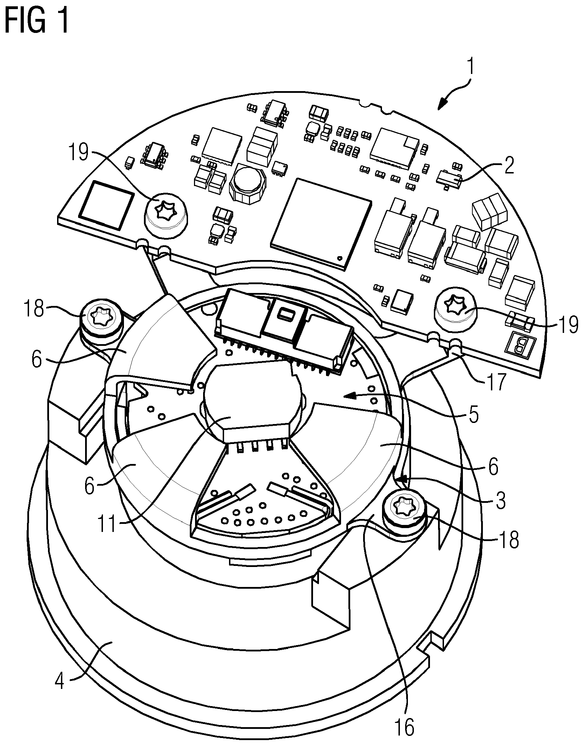

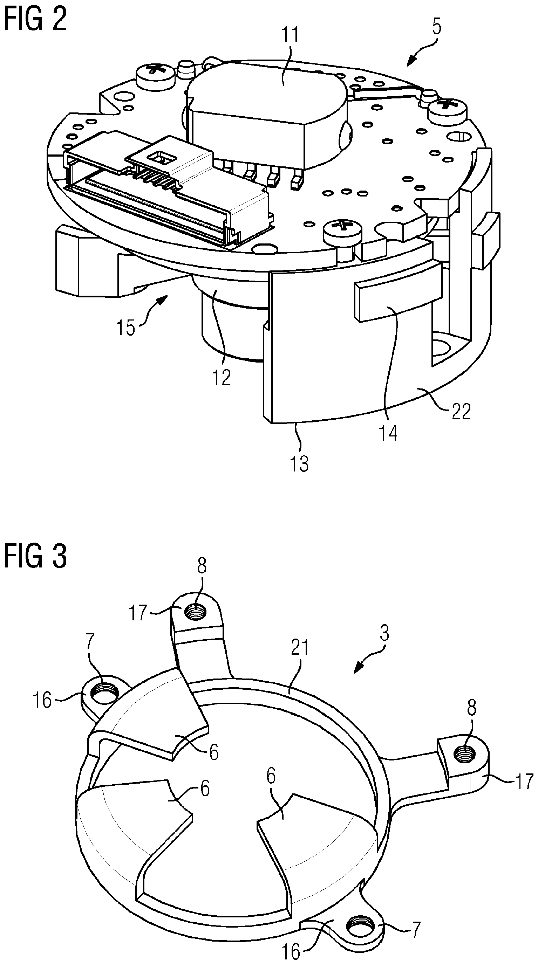

FIG 1 zeigt einen modularen Drehgeber 1 mit einer aus einem Haltering 3 und einem Lagerschild 4 gebildeten Haltevorrichtung. Mit dem Lagerschild 4 mechanisch über erste Befestigungsschrauben 18 mechanisch gekoppelt ist der Haltering 3, der dann im Zusammenhang mit FIG 3 noch näher gezeigt und erläutert wird. Der Haltering 3 besteht im Wesentlichen aus einem kreisrunden Ringelement 21 (vergleiche FIG 3), an dem Abschirmlaschen 6 angeordnet sind. Darüber hinaus sind an dem Ringelement 21 des Halterings 3, erste Kopplungselemente 16 vorgesehen, die Befestigungslöcher 7 aufweisen. Diese ersten Kopplungselemente 16 sind nockenförmig an das Ringelement 21 angeformt. Die Befestigungslöcher 7 (vergleiche FIG 3) dienen der Durchführung der ersten Befestigungsschrauben 18 für die mechanische Kopplung des Halterings 3 mit dem Lagerschild 4.

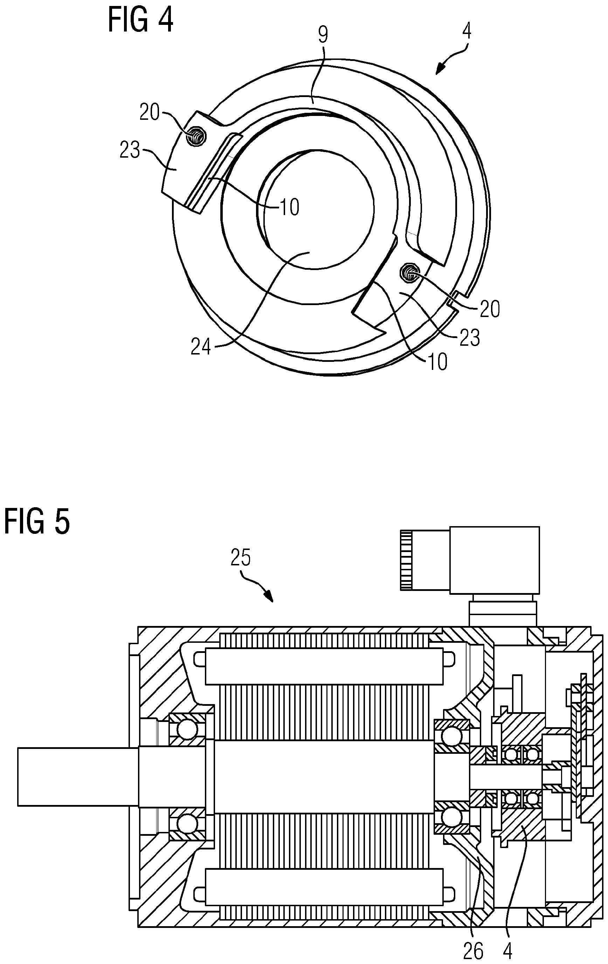

Der in FIG 1 dargestellte Drehgeber 1 enthält darüber hinaus eine Gebereinheit 5, die in dem Lagerschild 4 mechanisch gelagert ist (vergleiche FIG 4) und vom Haltering 3 zusätzlich mechanisch gehalten wird. Am Haltering 3 sind darüber hinaus zweite Kopplungselemente 17 angeordnet, in denen Gewindebohrungen 8 zur Aufnahme einer Platine 2 vorgesehen sind, wobei die Platine 2 mittels zweiter Befestigungsschrauben 19 in den ersten Gewindebohrungen 8 des Halterings 3 (vergleiche FIG 3) mechanisch befestigt ist. Die Gebereinheit 5 trägt einen im oberen Bereich sichtbaren sogenannten Wiegand-Sensor 11, wobei mittels der an den Haltering 3 angeformten Abschirmlaschen eine Abschirmung des Wiegand-Sensors 11 sichergestellt wird.

Die Besonderheit des in FIG 1 dargestellten modularen Drehgebers besteht darin, dass der Drehgeber 1 auf einfache und sichere Weise aus wenigen modularen Komponenten zusammengesetzt werden kann, wobei der modulare Drehgeber 1 aufgrund der speziellen modularen Bauweise eine einfache Montage sowie auch einen sicheren Betrieb des Drehgebers 1 ermöglicht. Eine Besonderheit des modularen Drehgebers besteht dabei darin, dass an der Gebereinheit 5 im oberen Bereich an gegenüber liegenden Seiten Laschen 14 (vergleiche FIG 2) angeordnet sind, die mit korrespondierenden Führungsnuten 10 (vergleiche FIG 4) des Lagerschildes 4 wirken und so eine stabile Lagerung der Gebereinheit 5 im Lagerschild 4 sicherstellen. Auch die für eine Koordinaten-Konversion benötigte Platine 2 ist bei dem in FIG 1 dargestellten Drehgeber 1 auf einfache und sichere Weise am Haltering 3 des Drehgebers 1 mechanisch befestigt, wobei über die Schraubverbindungen 19 zudem auch eine elektrische Masseverbindung sichergestellt ist. Zusätzliche störanfällige Masseleitungen können daher entfallen.

Die Besonderheit des in FIG 1 dargestellten Drehgebers 1 besteht somit darin, dass im Gegensatz zu bisherigen Lösungen der Anbau des Drehgebers 1 sehr einfach durchzuführen ist. So lässt sich durch die spezielle Gestaltung des Lagerschildes 4 (vergleiche FIG 2) mit den seitlichen Nuten 10 die Gebereinheit 5, welche auch als sogenanntes C-Modul bezeichnet wird, sehr leicht in die richtige Position schieben, wobei so eine fehlerhafte Montage nahezu ausgeschlossen ist. Das Lagerschild 4 weist darüber hinaus auf der dem Einschub gegenüberliegenden Seite eine Staubschutzwand 9 (vergleiche FIG 4) auf, die die Code-Scheibe 12 (vergleiche FIG 2) der Gebereinheit 5 vor Verschmutzung schützt. Auch der Haltering 3 integriert gleichzeitig mehrere Funktionen, nämlich klemmt er zum einen die Gebereinheit 5 und hält die Platine 2 und schirmt mittels der Abschirmlaschen 6 noch den Wiegand-Sensor 11 ab. Aufgrund der Staubschutzwand 9 des Lagerschilds 4 kann somit auf eine separate Staubschutzkappe verzichtet werden, die ansonsten erforderlich wäre. Wie bereits ausgeführt, erfolgt eine Erdung der Platine 2 direkt über das Verschrauben mit dem Haltering 3. Durch eine Fertigung des Halterings 3 aus einem leitfähigen Material, insbesondere aus Stahl, ist ein separater Erdungsbügel nicht mehr notwendig, wie er bei bisher aus Kunststoff ausgeführten Staubschutzkappen bzw. Befestigungsvorrichtungen erforderlich wäre.

Somit integriert der Haltering, wie bereits ausgeführt, die Funktionen "Geber klemmen, Platine halten und erden sowie die Abschirmung des Wiegand-Sensors". Insgesamt kommt es hierdurch zu einer Senkung der Montagekosten sowie zu einer Erhöhung der Qualität bei der Montage als auch beim Betrieb und darüber hinaus auch zu einer leichten Reparaturfähigkeit im Servicefall.

Die Montage des modularen Drehgebers an einem Motorlagerschild 26 einer elektrischen Maschine 25 (vgl. FIG 5) erfolgt somit im Wesentlichen in folgenden Schritten:
- Geberlagerung montieren: Aufbau der Geberlagerung, bestehend aus einem Lagerschild, einer Geberlagerungswelle mit zwei Kugellagern und einer Anstellfeder sowie einer Kupplungshälfte.- Aufpressen der Codescheibe: Hierzu wird die Codescheibe 12 auf die Geberlagerungswelle der elektrischen Maschine 25 aufgepresst.
- Einschieben des Gebermoduls 13: Dabei dienen die Laschen 14 als Führung in den Nuten 10 des Lagerschilds 4.
- Einsetzen des Gebermoduls 13 in den durch eine Öffnung 24 im Lagerschild 4 gebildeten Zentrierabsatzes.
- Aufsetzen des Halterings 3 auf das Lagerschild 4 und Montage des Halterings 3 auf dem Lagerschild 4 mittels der ersten Befestigungsschrauben.
- Auflegen der Platine 2 auf den Haltering 3 und Befestigung der Platine 2 auf dem Haltering 3 mittels der zweiten Befestigungsschrauben .
- Montage der Platine incl. Verbindungsleitung auf den Haltering mittels der Befestigungsschrauben.
- Montage der kompletten Gebereinheit 1 an die elektrische Maschine 25.

FIG 2 zeigt ein Gebermodul 5 für den in FIG 1 gezeigten modularen Drehgeber 1. In FIG 2 ist nochmals dargestellt, aus welchen Komponenten im Wesentlichen die Gebereinheit 5 besteht. Die Gebereinheit 5 umfasst im Wesentlichen eine Öffnung 15 für das Gebermodul 13 mit der Codescheibe 12. Die Gebereinheit 5 weist eine zylinderförmige Seitenwand 22 auf, die an jeweils zwei gegenüberliegenden Seiten mit Laschen 14 versehen aufweist. Diese Laschen 14 korrespondieren mit Führungsnuten 10, wie sie in FIG 4 am Lagerschild 4 vorgesehen sind. Die Laschen 14 dienen somit einer Führung und Ausrichtung der Winkellage. In FIG 2 ist darüber hinaus auch noch der Wiegand-Sensor 11, wie er bereits im Zusammenhang mit FIG 1 erläutert wurde, erkennbar. Bezüglich der Wirkungsweise und dem Zusammenspiel der Gebereinheit 5 in Bezug auf den modularen Drehgeber 1, wird auf die Ausführungen zu FIG 1 sowie den übrigen Figuren verwiesen.

FIG 3 zeigt einen Haltering 3 für den in FIG 1 gezeigten modularen Drehgeber 1. Der Haltering 3 besteht im Wesentlichen aus einem Ringelement 21, an das Abschirmlaschen 6 angeformt sind. Darüber hinaus weist der Haltering 3 erste Kopplungselemente 16 sowie zweite Kopplungselemente 17 auf, die ersten Kopplungselemente 16 sind als an das Ringelement 21 angeformte Nocken 16 ausgebildet, in die Befestigungslöcher 7 zur Aufnahme von ersten Befestigungsschrauben für das Lagerschild (vergleiche FIG 1) eingebracht sind. Die zweiten Kopplungselemente 17 sind als an das Ringelement 21 angeformte zweite Nocken 17 ausgebildet, die erste Gewindebohrungen 8 zur Aufnahme von zweiten Befestigungsschrauben 19 für die Platine (vergleiche FIG 1) aufweisen.

Die zweiten Nockenelemente 17 sind gegenüber den ersten Nockenelementen 16 vom Ringelement 21 weiter beabstandet ausgebildet und die Stärke dieser Nockenelemente 17 ist im Bereich der Gewindebohrungen 8 stärker ausgestaltet, um einen sicheren Sitz der Befestigungsschrauben 19 für die Platine 2 sicherzustellen.

FIG 4 zeigt schließlich ein Lagerschild 4 für den in FIG 1 gezeigten modularen Drehgeber 1. Die Besonderheit des in FIG 4 dargestellten Lagerschildes 4 besteht darin, dass an dem Lagerschild 4 ein halbkreisförmiges Bandelement 23 vorgesehen ist, welches an gegenüberliegenden Seiten jeweils Führungsnuten 10 aufweist, die zur Aufnahme der an der Gebereinheit 5 angeordneten Führungslaschen 14 vorgesehen sind. Der vordere Halbkreis des Lagerschilds 4 zwischen den Wandelementen 23 ist in einem ersten Halbkreisbereich offen gestaltet, so dass eine Einführung der Gebereinheit 5 ermöglicht wird, während der gegenüberliegende Bereich des Lagerschilds 4 eine Staubschutzwand 9 trägt, die als Staubschutz für das Gebermodul bzw. die gesamte Gebereinheit 5 und insbesondere die Codescheibe 12 dient.

FIG 5 zeigt einen Seitenschnitt durch eine elektrische Maschine 25 mit einem modularen Drehgeber. Die Figur dient insbesondere einer Verdeutlichung, wo und wie der modulare Drehgeber mit einem Motorlagerschild 26 der elektrischen Maschine über das Lagerschild 4 des Drehgebers gekoppelt ist.

## Patentansprüche

1. Haltevorrichtung (3, 4) zur Kopplung einer Gebereinheit (5) eines Drehgebers (1) mit einer elektrischen Maschine (25) ,
wobei die Haltevorrichtung (3, 4) aus
einem Haltering (3) und aus einem Lagerschild (4) gebildet wird,
wobei der Haltering (3) erste Kopplungselemente (16) zur mechanischen Kopplung des Halterings (3) mit dem Lagerschild (4) aufweist, wobei das Lagerschild (4) Führungsnuten (10) zur Aufnahme eines Gebermoduls (13) der Gebereinheit (5) aufweist,
wobei der Haltering (3) dazu ausgebildet ist, das Gebermodul (13) zu klemmen und an das Lagerschild (4) zu drücken,
wobei die im Haltering (3) vorgesehenen ersten Kopplungselemente (16) als Bohrungen (7) zur Aufnahme von ersten Befestigungsschrauben (18) zur mechanischen Befestigung des Halterings (3) auf dem Lagerschild (4) ausgebildet sind,
wobei an den Haltering (3) mindestens ein Abschirmelement (6) zur Abschirmung von äußeren Störfeldern angeformt ist.

2. Haltevorrichtung nach Anspruch 1,
wobei der Haltering (3) zweite Kopplungselemente (17) zur mechanischen Kopplung des Halterings (3) mit einer Platine (2) der Gebereinheit (5) aufweist.

3. Haltevorrichtung nach Anspruch 2,
wobei der Haltering (3) aus leitfähigem Material gefertigt ist, so dass eine Erdung der Platine (2) direkt über das Verschrauben mit dem Haltering (3) ohne separaten Erdungsbügel erfolgt.

4. Haltevorrichtung nach Anspruch 3,
wobei die im Haltering (3) vorgesehenen zweiten Kopplungselemente (17) als Gewindebohrungen (8) zur Aufnahme von zweiten Befestigungsschrauben (19) ausgebildet sind, wobei die zweiten Befestigungsschrauben (19) sowohl einer mechanischen Befestigung der Platine (2) auf dem Haltering (3) als auch einer elektrischen Masseverbindung der Platine (2) dienen.

5. Haltevorrichtung nach einem der vorhergehenden Ansprüche, wobei das an den Haltering (3) angeformte Abschirmelement (6) zur Abschirmung von auf einen an der Gebereinheit (5) angeordneten Wiegand-Sensor (11) einwirkenden äußeren Störfeldern vorgesehen ist.

6. Haltevorrichtung nach einem der vorhergehenden Ansprüche, wobei das Abschirmelement (6) als segmentförmige Laschen (6) oder als geschlossener Topf ausgebildet ist.

7. Haltevorrichtung nach einem der vorhergehenden Ansprüche, wobei das Lagerschild (4) eine insbesondere halbkreisförmig ausgebildete Staubschutzwand (9) zum Schutz einer in dem Lagerschild (4) angeordneten Codescheibe (12) aufweist.

8. Drehgeber (1) mit einer Haltevorrichtung (3,4) nach einem der Ansprüche 1 bis 7.

9. Drehgeber nach Anspruch 8,
wobei der Drehgeber (1) als modularer Drehgeber mit einem Drehgebermodul (5), einer Codescheibe (12) und einer Platine (2) ausgebildet ist.

10. Drehgeber nach einem der Ansprüche 8 oder 9,
wobei das Gebermodul (13) mindestens zwei Führungslaschen (14) aufweist, die insbesondere am oberen Ende des Gebermoduls (13) angeordnet sind, wobei die Führungslaschen (14) zum Zusammenwirken mit den im Lagerschild vorgesehenen Führungsnuten (10) vorgesehen sind.

11. Elektrische Maschine mit mindestens einer Haltevorrichtung (3,4) nach einem der Ansprüche 1 bis 7 oder mit mindestens einem Drehgeber nach Anspruch 8.

12. Verfahren zur Montage eines Drehgebers (1) nach Anspruch 10, wobei das Verfahren folgende Schritte umfasst:
- Aufbau der Geberlagerung bestehend aus einem Lagerschild (4), einer Geberlagerungswelle insbesondere mit zwei Kugellagern, einer Anstellfeder sowie einer Kupplungshälfte,
- Aufpressen der Codescheibe (12) auf die Geberlagerungswelle,
- Einschieben des Gebermoduls (13), wobei die Laschen (14) als Führung in den Nuten (10) des Lagerschilds (4) dienen,
- Einsetzen des Gebermoduls (13) in den durch eine Öffnung (24) im Lagerschild (4) gebildeten Zentrierabsatzes,
- Aufsetzen des Halterings (3) auf das Lagerschild (4),
- Montage des Halterings (3) auf dem Lagerschild (4) mittels der ersten Befestigungsschrauben (18),
- Montage der Platine (2) einschließlich Verbindungsleitung auf dem Haltering (3) mittels der zweiten Befestigungsschrauben (19),
- Montage der kompletten Gebereinheit (1) an die elektrische Maschine (25).

## Claims

1. Retaining device (3, 4) for coupling an encoder unit (5) of a rotary encoder (1) to an electric machine (25),
wherein the retaining device (3, 4) is formed from a retaining ring (3) and an end shield (4),
wherein the retaining ring (3) has first coupling elements (16) for mechanically coupling the retaining ring (3) to the end shield (4), wherein the end shield (4) has guide grooves (10) for receiving an encoder module (13) of the encoder unit (5) ,
wherein the retaining ring (3) is embodied to clamp the encoder module (13) and press it against the end shield (4), wherein the first coupling elements (16) that are provided in the retaining ring (3) are embodied as holes (7) so as to receive first fastening screws (18) in order to mechanically fasten the retaining ring (3) to the end shield (4),
wherein at least one shielding element (6) for shielding against external interference fields is integrally formed on the retaining ring (3).

2. Retaining device according to claim 1,
wherein the retaining ring (3) has second coupling elements (17) for mechanically coupling the retaining ring (3) to a circuit board (2) of the encoder unit (5).

3. Retaining device according to claim 2,
wherein the retaining ring (3) is produced from conductive material with the result that the circuit board (2) is directly grounded via the screwing arrangement to the retaining ring (3) without a separate grounding bracket.

4. Retaining device according to claim 3,
wherein the second coupling elements (17) that are provided in the retaining ring (3) are embodied as threaded holes (8) for receiving second fastening screws (19), wherein the second fastening screws (19) are used both as a mechanical fastening of the circuit board (2) on the retaining ring (3) as well as an electrical ground connection of the circuit board (2).

5. Retaining device according to one of the preceding claims, wherein the shielding element (6) that is integrally formed on the retaining ring (3) is provided so as to shield against external interference fields that act upon a Wiegand sensor (11) that is arranged on the encoder unit (5).

6. Retaining device according to one of the preceding claims, wherein the shielding element (6) is embodied as segmentshaped tabs (6) or as a closed pot.

7. Retaining device according to one of the preceding claims, wherein the end shield (4) has a dust protection wall (9) that is embodied in particular in a semicircular manner so as to protect a code disk (12) that is arranged in the end shield (4) .

8. Rotary encoder (1) having a retaining device (3, 4) according to one of claims 1 to 7.

9. Rotary encoder according to claim 8,
wherein the rotary encoder (1) is embodied as a modular rotary encoder having a rotary encoder module (5), a code disk (12) and a circuit board (2).

10. Rotary encoder according to one of claims 8 or 9,
wherein the encoder module (13) has at least two guide tabs (14) that are arranged in particular on the upper end of the encoder module (13), wherein the guide tabs (14) are provided so as to cooperate with the guide grooves (10) that are provided in the end shield.

11. Electric machine having at least one retaining device (3, 4) according to one of claims 1 to 7 or having at least one rotary encoder according to claim 8.

12. Method for mounting a rotary encoder (1) according to claim 10, wherein the method comprises the following steps:
- constructing the encoder bearing arrangement from an end shield (4), an encoder bearing shaft having in particular two ball bearings, an engagement spring and a coupling half,
- pressing the code disk (12) onto the encoder bearing shaft,
- sliding the encoder module (13) in, wherein the tabs (14) are used as a guiding arrangement in the grooves (10) of the end shield (4),
- inserting the encoder module (13) into the centring shoulder that is formed by an opening (24) in the end shield (4),
- placing the retaining ring (3) onto the end shield (4),
- mounting the retaining ring (3) on the end shield (4) by means of the first fastening screws (18),
- mounting the circuit board (2) including the connecting line on the retaining ring (3) by means of the second fastening screws (19),
- mounting the complete encoder unit (1) on the electric machine (25).

## Revendications

1. Dispositif (3, 4) de maintien pour l'accouplement d'une unité (5) d'un codeur (1) rotatif à une machine (25) électrique, dans lequel le dispositif (3, 4) de maintien est formé d'un anneau (3) de maintien et d'un flasque (4),
dans lequel l'anneau (3) de maintien a de premiers éléments (16) d'accouplement pour l'accouplement mécanique de l'anneau (3) de maintien au flasque (4), dans lequel le flasque (4) a des rainures (10) de guidage de réception d'un module (13) de codeur de l'unité (5) de codeur,
dans lequel l'anneau (3) de maintien est constitué pour serrer le module (13) de codeur et le pousser sur le flasque (4),
dans lequel les premiers éléments (16) d'accouplement, prévus dans l'anneau (3) de maintien, sont constitués sous la forme de trous (7) de réception de premières vis (18) de fixation, pour la fixation mécanique de l'anneau (3) de maintien sur le flasque (4), dans lequel, sur l'anneau (3) de maintien, vient de matière au moins un élément (6) de blindage, pour la protection vis-à-vis de champs extérieurs perturbateurs.

2. Dispositif de maintien suivant la revendication 1,
dans lequel l'anneau (3) de maintien a des deuxièmes éléments (17) d'accouplement pour l'accouplement mécanique de l'anneau (3) de maintien à une platine (2) de l'unité (5) de codeur.

3. Dispositif de maintien suivant la revendication 2,
dans lequel l'anneau (3) de maintien est en un matériau conducteur, de manière à obtenir une mise à la terre de la platine (2) directement par le vissage avec l'anneau (3) de maintien sans étrier distinct de mise à la terre.

4. Dispositif de maintien suivant la revendication 3,
dans lequel les deuxièmes éléments (17) d'accouplement, prévus dans l'anneau (3) de maintien sont constitués sous la forme de trous (8) taraudés de réception de deuxièmes vis (19) de fixation, dans lequel les deuxièmes vis (19) de fixation servent tant à une fixation mécanique de la platine (2) sur l'anneau (3) de maintien, qu'également à une liaison de masse électrique de la platine (2).

5. Dispositif de maintien suivant l'une des revendications précédentes,
dans lequel l'élément (6) de blindage venu de matière sur l'anneau (3) de maintien est prévu pour le blindage vis-à-vis de champs extérieurs parasites agissant sur un capteur (11) de Wiegand monté sur l'unité (5) de codeur.

6. Dispositif de maintien suivant l'une des revendications précédentes,
dans lequel l'élément (6) de blindage est constitué sous la forme de languettes (6) en forme de segment ou sous la forme d'un pot fermé.

7. Dispositif de maintien suivant l'une des revendications précédentes,
dans lequel le flasque (4) a une paroi (9) de protection vis-à-vis de la poussière, constitué notamment sous la forme d'un demi cercle, pour la protection d'un disque (12) de codage monté dans le flasque (4).

8. Codeur (1) rotatif ayant un dispositif (3, 4) de maintien suivant l'une des revendications 1 à 7.

9. Codeur rotatif suivant la revendication 8,
dans lequel le codeur (1) rotatif est constitué sous la forme d'un codeur rotatif modulaire ayant un module (5) de codeur rotatif, un disque (12) de codage et une platine (2).

10. Codeur rotatif suivant l'une des revendications 8 ou 9, dans lequel le module (13) de codeur a au moins deux languettes (14) de guidage, qui sont disposées notamment à l'extrémité supérieure du module (13) de codeur, les languettes (14) de guidage étant prévues pour coopérer avec des rainures (10) de guidage prévues dans le flasque.

11. Machine électrique ayant au moins un dispositif (3, 4) de maintien suivant l'une des revendications 1 à 7 ou au moins un codeur rotatif suivant la revendication 8.

12. Procédé de montage d'un codeur (1) rotatif suivant la revendication 10, dans lequel le procédé comprend les stades suivants :
- constitution du montage du codeur constitué d'un flasque (4), d'un arbre de montage du codeur, ayant notamment deux roulements à billes, d'un ressort de réglage ainsi que d'une moitié d'accouplement,
- serrage du disque (12) de codage sur l'arbre de montage du codeur,
- insertion du module (13) de codeur, les languettes (14) servant de guidage dans les rainures (10) du flasque (4),
- insertion du module (13) de codeur dans l'interruption de centrage formé par une ouverture (24) dans le flasque (4),
- pose de l'anneau (3) de maintien sur le flasque (4),
- montage de l'anneau (3) de maintien sur le flasque (4) au moyen des premières vis (18) de fixation,
- montage de la platine (2), y compris d'une ligne de liaison, sur l'anneau (3) de maintien au moyen des deuxièmes vis (19) de fixation,
- Montage de l'unité (1) complète de codeur sur la machine (25) électrique.
